# EUROPEAN PATENT SPECIFICATION

(11) **EP 3 024 282 B1**
(45) Date of publication and mention of the grant of the patent: **29.03.2023**
(21) Application number: 14290350.9
(22) Date of filing: 18.11.2014
(51) Int. Cl.: H04W 28/02, H04W 28/08, H04W 28/10, H04W 88/06, H04W 48/18, H04L 47/2425

(54) **METHOD AND DEVICE FOR DATA TRANSMISSION**
Verfahren und Vorrichtung für Datenübertragung
Procédé et dispositif pour la transmission de données

(43) Date of publication of application: 25.05.2016
(73) Proprietor: Alcatel Lucent, 91620 Nozay (FR)
(72) Inventor: Aydin, Osman, 70435 Stuttgart (DE); Braun, Volker, 70435 Stuttgart (DE); Halbauer, Hardy, 70435 Stuttgart (DE)
(74) Representative: DREISS Patentanwälte PartG mbB

(56) References cited:
- EP-A2- 2 696 627
- GB-A- 2 398 705
- US-A1- 2005 053 046
- US-A1- 2008 002 641

## Description

### Field of the invention

The invention relates to a method and device for data transmission in a telecommunication network.

### Background

US 2005/053046 A1 discloses load balancing in a wireless local area network.

GB 2 398 705 A discloses a method of selecting one or more available wireless connections from a plurality of said connections between a mobile terminal and one or more base stations for a service requested by a user of the terminal or base stations.

EP 2 696 627 A2 discloses a method for selecting a network in a machine to machine communication.

The 4G/IMT-Advanced standard supports frequency bands allocated for cellular phone use for example within a frequency range between 300 MHz and 3 GHz.

Telecommunication networks according to current 4G/IMT-Advanced standards are expected to evolve further.

In general a connection in a telecommunication network using a frequency band below 6 GHz is referred to as IMT link below.

A connection using a frequency band above 6 GHz, e.g. millimeter wave (MMW) frequencies, may be used in a telecommunication network as well to enable typically multi-Gbps data rates. Such connection is explained using the example of a MMW link below.

Typically the supported data rates on a MMW link are 1-2 orders of magnitude higher than those on an IMT link.

Mobile stations in an IMT system may simultaneously support an IMT link and a MMW link for transmitting data. Mobile stations for example may simultaneously support a 4G IMT link and a MMW link.

When a mobile station has, depending on its capability, access to an IMT link, e.g. a 4G IMT link and a MMW link simultaneously the mobile station may be adapted to decide, depending on a configuration by a user, which link to use, for example for packet switched services.

Packet switched services include low data rate data streams for example for voice over internet protocol (VoIP) data, chat service data or hypertext transfer protocol (HTTP) data and high data rate data streams for example for file transfer protocol (FTP) data or high definition (HD) video data.

Based on user selection at the mobile station the packet switched service may use the IMT link or the MMW link. This requires however involvement by the user as path selection is performed by the mobile station.

Furthermore all packet switched services are then carried over the selected link even when another link is available and may be preferable to increase the data rate and hence the user experience.

For example for low rate chat service data the IMT link is preferable because carrying low rate traffic on the MMW link is very inefficient as signaling overhead is considerably higher for the MMW link than for IMT link. Also the coverage of the MMW link may be patchy and the bandwidth of the MMW link may be fully used up already. This may result in a poor user experience.

Network assisted processes exist to support the mobile station to discover non-3GPP RAN (Radio Access Networks) links that can be used additionally for data traffic. One is called Access network discovery and selection function (ANDSF) and it provides the mobile station with network selection parameters and policies. However this results in a static link selection that doesn't differentiate between the individual packet-switched service types.

### Summary

Technical features of the invention are defined by the appended independent claims 1 and 17.

The main idea of the claimed invention is to transmit data in a telecommunication network between a mobile station and a mobile radio network providing a first data link in a predetermined first frequency band, in particular below 6 GHz, and a second data link in a predetermined second frequency band higher than the predetermined first frequency band, in particular above 6 GHz, wherein said mobile station simultaneously supports said first data link and said second data link and multiple packet switched services, wherein the data link for transmitting a data stream of one of said packet switched services is selected from the first data link and the second data link at a network node of the mobile radio network depending on information about a current data rate of the data stream, wherein for a data stream with a first data rate, being a bit rate in the range of kbps, kilobits per second, the first data link is selected and for a data stream with a second data rate, the second data rate being a data rate higher than the first data rate, the second data link is selected. This way an individual packet switched path is selected for individual services by the network without user involvement.

Advantageously the current data rate of the data stream is measured at an entity of the mobile radio network belonging to the selected data link. This way the mobile station is not involved in the decision process.

Advantageously information about the service type of the data stream is detected at an entity of the mobile radio network belonging to the selected data link from a quality of service parameter of the data stream. This way the mobile station is not involved in the decision process and the network nodes can independently optimize the resource usage without involving any additional signaling with the mobile station. This results in less control overhead on the air interface and efficient assignment of frequency bands without additional feedback from the mobile station.

Advantageously information about the service type of the data stream is detected by measuring the data rate of the data stream at an entity of the mobile radio network belonging to the selected data link and correlating the measured data rate with information about the selected data link. This way the mobile station is not involved in the decision process.

Advantageously information about the service type is determined from information about the current data load of the data link used for the data stream or information about predetermined service types or context information history of used service types or service types limited to the mobile station device type. For example from this it is determined that the mobile station is a sensor with constrained Quality of Service requirement regarding data throughput or a sensor built into a vehicle with absolute requirements such as small data transmission delay, or the combination of these.

The invention also concerns a corresponding device for transmitting data. Further developments of the invention can be derived from the dependent claims and the following description.

### Brief description of the figures

Figure 1 depicts schematically part of a mobile radio network.
Figure 2 depicts a method for transmitting data.

### Description of the embodiments

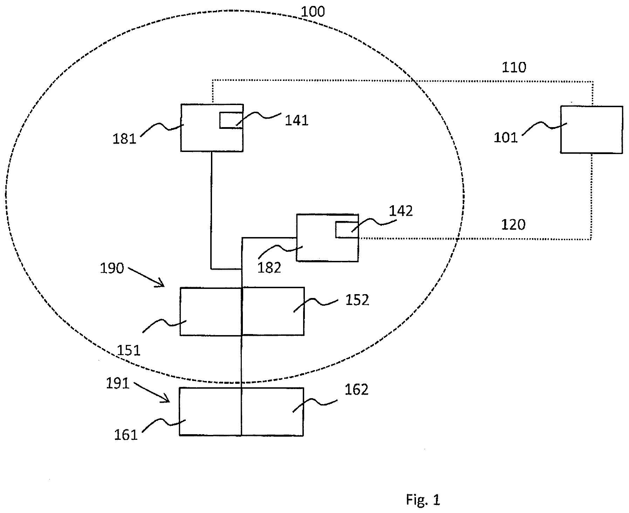

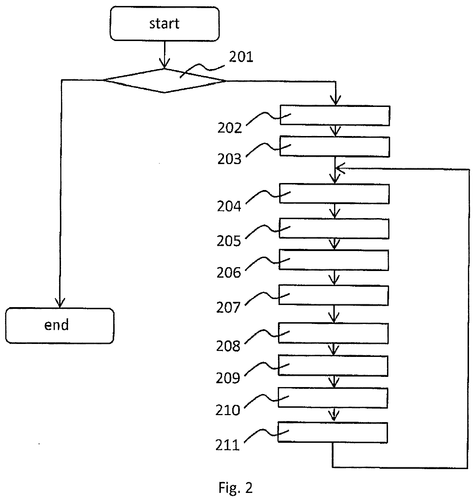

Referencing figure 1 and figure 2 according to an example a network node and method are described that select whether to transmit data in a telecommunication network between a mobile station 101 and a mobile radio network 100 providing a first data link 110 and a second data link 120. Mobile radio network 100 in general refers to part of a telecommunication network used to connect to a mobile station 101, e.g. a radio access network (RAN).

The first data link 110 in the claimed invention is operating in a predetermined first frequency band, in particular below 6 GHz. This link may be a 4G IMT link and is referred to as IMT link below.

The second data link 120 in the claimed invention is operating in a predetermined second frequency band higher than the predetermined first frequency band, in particular above 6 GHz. This link may be a Millimeter Wave Link and is referred to as MMW link below.

The example is not limited to 4G IMT links but also applies to links that are integrated with support for legacy IMT systems.

A generic control plane implemented in the mobile radio network 100 and a corresponding control plane in the mobile station 101 enables the mobile station 101 to connect to the mobile radio network 100 via at least two different data links.

In the example the mobile station 101 is adapted to connect to the mobile radio network 100 via the first data link 110 and the second data link 120.

Figure 1 depicts a first radio resource management entity 141 referred to as IMT-RRM 141 below and a second radio resource management entity 142 referred to as W-RRM 142 below.

The IMT-RRM 141 and W-RRM 142 are part of the generic control plane of the mobile radio network 100 and adapted to allocate radio resources. In the example the IMT-RRM 141 is adapted to allocate radio resources of the first data link 110, e.g. the IMT link. The W-RRM 142 is adapted to allocate radio resources of the second data link 120, e.g. the MMW-link.

The IMT-RRM 141 and the W-RRM 142 for example comprise an implementation of respective packet segmentation, retransmission schemes and packet scheduler, i.e. the radio link control layer (RLC), the media access control layer (MAC) and the physical layer (PHY).

In an implementation a first base station 181 and a second base station 182 contain an implementation of the RLC/MAC/PHY of the IMT-RRM 141 and W-RRM 142 for their respective data links.

Figure 1 depicts a first radio resource control entity 151, referred to as IMT-RRC 151 below and a second radio resource control entity 152, referred to as W-RRC 152 below.

The IMT-RRC 151 and the W-RRC 152 are part of the generic control plane of the mobile radio network 100 and adapted to configure respective radio parameters. The IMT-RRC 151 and the W-RRC 152 are for example adapted to configure cell specific parameters, e.g. carrier frequency, band width of the respective data link. The IMT-RRC 151 and the W-RRC 152 are for example adapted to configure mobile station specific parameters, e.g. control signaling or semi-static resource assignments for the respective data link.

The IMT-RRC 151 and the W-RRC 152 are also adapted to control the admission or release of mobile stations, i.e. radio admission control, for the respective data link.

Data links, depicted as solid lines in figure 1 connect the aforementioned elements of the mobile radio network 100.

In an implementation according to the example a centralized network node 190 contains an implementation of the IMT-RRC 151 and the W-RRC 152.

In an alternative implementation the respective part of the IMT-RRC 151 and the W-RRC 152 are implemented in another network node, e.g. the first base station 181 and the second base station 182 containing the IMT-RRM 141 and the W-RRM 142 respectively. In this case the first base station 181 and the second base station 182 may be co-sited.

Figure 1 depicts a first mobility management entity 161 referred to as IMT-MME 161 below and a second mobility management entity 162 referred to as W-MME 162 below.

The IMT-MME 161 and the W-MME 162 are part of the generic control plane of the mobile radio network 100 and adapted e.g. to receive handover measurement reports. The IMT-MME 161 and the W-MME 162 may be adapted to receive additional information such as traffic load per cell. The IMT-MME 161 and the W-MME 162 are adapted to instruct base stations and mobile stations to perform a handover and to adapt the user plane paths depending on the received reports and when applicable the additional information.

In an implementation according to the example the core network 191 contains an implementation of the IMT-MME 161 and the W-MME 162.

In an alternative implementation the respective part of the IMT-MME 161 and the W-MMW 162 is implemented in the first base station 181 and the second base station 182 containing the IMT-RRM 141 and the W-RRM 142 respectively. In this case the first base station 181 and the second base station 182 may be co-sited.

In another alternative implementation the IMT-MME 161, the W-MME 162, the IMT-RRC 151 and the W-RRC 152 are co-sited.

The W-RRM 142 and the IMT-RRM 141 denote the entity responsible for radio resource management of the MMW link and the IMT link respectively.

Additionally, the centralized network node 190 or the first base station 181 may be adapted to monitor the data rate on the first link 110 per service, e.g. per radio bearer above RLC layer.

Additionally, the centralized network node 190 or the second base station 182 may be adapted to monitor the data rate on the second link 120 per service, e.g. per radio bearer above RLC layer.

A method of transmitting data in a telecommunication network between the mobile station 101 and the mobile radio network 100 providing the first data link 110 and the second data link 120 is described below referencing figure 2.

Goal of the method is to improve the user experience by distributing at least part of the data traffic for packet-switched services between the first link 110 and the second link 120.

The first data link 110 in the example is operating on a predetermined first frequency band, in particular below 6 GHz, and the second data link 120 is operating on a predetermined second frequency band higher than the predetermined first frequency band, in particular above 6 GHz.

Before the start of the method the mobile station 101 and the mobile radio network 100 have established the first link 110 that carries traffic for multiple services, i.e. radio bearers above RLC layer, such as VoIP, chat or file download, e.g. via FTP.

The method for example starts if the W-RRC 152 detects an access attempt from the mobile station 101 to establish the second link 120.

The access attempt is in this case an attempt by the mobile station 101 to setup the MMW link e.g. using a random access procedure. The attempt is started when the mobile station 101 detects a MMW cell, and after the mobile station 101 has performed link synchronization with the MMW cell.

After the start, in a step 201, the W-RRC 152 performs admission control. If admission of the mobile station 101 is possible, i.e. the mobile station 101 can be added to the MMW cell, a step 202 is executed. Otherwise the method ends.

In step 202 the setup of the second link 120, e.g. the MMW link is completed.

Afterwards a step 203 is executed.

In step 203 information indicating that the mobile station 101 has setup an additional second link 120, e.g. the MMW link, is transmitted from the W-MME 162 to the IMT-MME 161.

Afterwards a step 204 is executed.

In step 204, a service type, e.g. VoIP or chat service, is detected from the current data rates as service that has a low data rate (-kbps) or a periodic data transfer scheme (e.g. every 20ms), while a file download service or HD video stream is detected as a service with high data rate (~Gbps) transmissions. This is used to classify the detected services according to predetermined classes, e.g. low, medium, high data rate.

Additionally, a service type, e.g. VoIP service, may be detected from the Quality of Service (QoS) parameters, e.g. the QoS Class Indicator (QCI) of long term evolution (LTE) or an Access Category (AC) of the IEEE 802.lie or Evolved. Packet System (EPS) bearer.

This means that information about the service type of the data stream is detected at an entity from a quality of service parameter of the data stream.

The service type may additionally or alternatively be detected as link utilization from information about the current data load of the data link used for the data stream and information about predetermined service types.

Predetermined service types, e.g. voice or video may be used to classify the services as well. Other entities like' the core network or packet data network,well known as PDN, outside the mobile radio network 100 can provide service type information to the mobile radio network 100.

The services, e.g. radio bearers, may be classified by the IMT-RRM 141. This is accomplished e.g. on MAC layer, where the packet scheduler measures data rate per service and correlates this data rate per service with other information such as link load. The classification information may include also *"*reliability information*"* (e.g. low, medium, high) indicating how confident IMT-RRM 141 is about its classification decision.

The data rate is for example measured in the IMT-RRM 141 on MAC, RLC or PDCP layer:

The MAC layer, implemented for example according to 3GPP TS36.321, uses a queue per service and the packet scheduler decides on schedule priorities upon the number of transmitted bits. The scheduler further receives information from the HARQ protocol to indicate successful transmission of a packet. With this information the packet scheduler can measure the data rate per service as the number of successfully transmitted bits within a certain time interval.

The data rate on RLC layer, for example implemented according to 3GPP TS36.322, can be determined by inspecting the headers of the RLC data PDUs, where the length indicator field determines the size of the data field element, and by taking into account the ACK info of the ARQ protocol.

Above the PDCP layer, data rate measurements per radio access bearer as defined in 3GPP TS36.314 may be used.

### Examples:

If data rate of a service is low during low link load the service can be classified as "low rate".

If data rate (or link utilization) of a service is high in the absence of other services the service can be classified as *"*high rate*"*.

If the data rate or link utilization of a service is low during low link load the service is classified as "low rate". The IMT-MME 161 may then in another step described below not map the service to the MMW link.

If the data rate or link utilization of a service is high in the absence of other services the service is classified as *"*high rate*"*. The IMT-MME 161 may then in another step described below map the service to the MMW link.

This means that information about the service type of the data stream is detected by measuring the data rate of the data stream at an entity of the mobile radio network 100 belonging to the data link and correlating the measured data rate with information about the data link. The meaning of correlation in this context becomes clear from the preceding examples.

Afterwards a step 205 is executed.

In step 205 upon receipt of the information that the mobile station 101 has setup an additional second data link 120, and information concerning the classification from the IMT-RRM 141, the IMT-MME 161 selects from the multiple services the first data link 110 carries, certain services, e.g. chat and file download services, to be re-allocated, while other services, e.g. the voice service, are continued on the IMT link. This means that it is determined which data stream can be re-allocated.

Afterwards a step 206 is executed.

In step 206 a re-allocation is requested. For example the IMT-MME 161 requests the IMT-RRC 151 to reallocate the identified services, e.g. the services categorized as "high rate" service. Likewise the IMT-MME 162 requests the W-RRC 152 via the W-MME 162 to reallocate the identified services.

This means that for example the IMT-MME 161 selects the data link to use for the data stream from the first data link 110 and the second data link 120.

Furthermore this means that for example the IMT-MME 161 triggers that chat and file download services are mapped to the MMW link, while the voice service is continued on the IMT link.

Afterwards a step 207 is executed.

In step 207 the current data rate of each service, i.e. for each data stream of a packet switched service, transmitted on the second data link 120 is measured by the W-RRM 142. Additionally the service type of a data stream may be detected or refined according to one or more of the characterizing features of the service, e.g. HD video.

In any case the data streams of individual services may be selected one by one and for example identified for each radio bearer above RLC layer.

Not necessarily all data streams are selected one by one. Instead only certain data streams may be selected. Preferably a data link is selected and the data rates of data streams of the selected data link are measured.

The data rate is for example measured in the W-RRM 142 on MAC, RLC or PDCP layer:
The MAC layer uses for example a queue per service and the packet scheduler decides on schedule priorities upon the number of transmitted bits. The scheduler further may receive information from the HARQ protocol to indicate successful transmission of a packet. With this information the packet scheduler can measure the data rate per service as the number of successfully transmitted bits within a certain time interval.

The data rate on RLC layer is for example determined by inspecting the headers of the RLC data PDUs, where the length indicator field determines the size of the data field element, and by taking into account the ACK info of the ARQ protocol.

Above the PDCP layer, data rate measurements per radio access bearer as defined in 3GPP TS36.314 may be used.

### Examples:

If data rate of a service is low during low link load the service can be classified as *"*low rate*"*.

If data rate (or link utilization) of a service is high in the absence of other services the service can be classified as *"*high rate*"*. To consider link utilization additionally the load on the second data link 120 may be measured and used to determine link utilization.

If the data rate or link utilization of a service is low during low link load the service is classified as *"*low rate*"*. In a next step described below the service may then be mapped back to the IMT link.

If the data rate or link utilization of a service is high in the absence of other services the service is classified as *"*high rate*"*. In a next step described below the service may then not be mapped back to the IMT link, but rather the service will be kept on the MMW link.

This means that information about the service type of the data stream is detected by measuring the data rate of the data stream at an entity of the mobile radio network 100 belonging to the data link and correlating the measured data rate with information about the data link.

Correlation in this context becomes clear from the preceding examples and for example means that a mapping of the data rate to the aforementioned classifications is used to select the link.

This also means that the current data rate of the data stream may be measured at an entity belonging to the selected data link.

Afterwards a step 208 is executed.

In step 208 current data rates and information about the service type are reported. In the example the W-RRM 142 sends the current data rates together with a service identifier, e.g. radio bearer to the IMT-MME 161.

Additionally the information about the service type may be sent together with the service identifier to the IMT-MME 161.

Advantageously, already detected service classification information assigned to services of the mobile station 101 may be transferred by the first base station 181, the second base station 182, the IMT-MME 161 or the W-MME 162 to any entity in the mobile radio network 100, e.g. RAN or the core network.

Additionally the service classification information assigned to the mobile station 101 may be detected by the first base station 181, e.g. the IMT-RRM 141, the second base station 182, e.g. the W-RRM 142, or another.entity of the mobile radio network 100, e.g. the IMT-MME 161 or the W-MME 162.

For example the service classification information is transferred by the first base station 181, e.g. the IMT-RRM 141 or the second base station 182, e.g. the W-RRM 142, to another entity of the mobile radio network 100, e.g. the IMT-MME 161 or the W-MME 162. In the example this information is transmitted to the IMT-MME161.

The information about the service type of the data stream is detected for example by measuring the data rate of the data stream at the entity of the mobile radio network 100 belonging to the data link. In the example the data link selected for this purpose is the second data link 120. This also means that the current data rate of the datastream is reported by the entity of the mobile radio network 100 belonging to the data link, e.g. the second data link 120.

Afterwards a step 209 is executed.

In step 209 a service and a data link for transmitting a data stream of this service are selected.

The data link is selected from the first data link 110 and the second data link 120 at a network node, e.g. the centralized network node 190, the core network 191, the first base station 181 or the second base station 182 of the mobile radio network 100 depending on the reported information about the current data rate of the data stream and information about the service type of the data stream.

The data link is for example selected for each currently active service one-by-one.

In the example the IMT-MME 161 is adapted to select the link. Any other entity may be adapted likewise instead.

The IMT-MME 161 categorizes the services based on the received information and selects services to be mapped based on their category.

To that end the measured data rate of any data stream may be correlated with the information about the service type of the data stream:
In principle, it is desirable to transmit low data rate packet switched services, e.g. VoIP or online chat like WhatsApp, or control plane traffic via the IMT link and to transmit high data rate packet switched services, e.g. FTP for large file downloads or HD video streaming, via the MMW link.

In the example the data rates on the second link 120 are monitored per service, e.g. per radio bearer above RLC layer.

The decision to allocate a data stream of a packet switched service to the first link 110 is based on the current data rate of the service. This means that the data stream is mapped to the first data link 110 only when it is a low data rate service. For example services identified as "low rate" service are selected as candidate to be mapped.

This way services like VoIP or online chat that require low data rates since data rates are limited by the application are detected as candidates for being mapped back to the IMT link.

Likewise for services like HD video streaming or file download, that can perform with high data rates since data rates are limited to high values by file servers, the maximum possible data rate may not be supported on the IMT link. These services are candidates for using the MMW link.

Additionally other link parameters, in particular the load on the data link and a predetermined offloading strategy, e.g. for traffic load distribution among base stations or for interference management purposes, is used to map services to the IMT link.

Additionally when the load on the IMT link is measured again as described above, before mapping a service to the IMT link, it may be determined if the service can be carried by the respective IMT link. This means that it may be checked if the first link 110 provides enough capacity to carry the data stream before re-allocation.

Afterwards a step 210 is executed.

In step 210 a re-allocation is requested to map the detected candidates from the second data link 120 to the first data link 110.

Mapping in this context refers to the re-distribution of the radio link used, in particular the re-allocation of the service from the second data link 120 back to the first data link 110.

To that end the re-allocation is requested by the IMT-MME 161 as described above.

For example the IMT-MME 161 requests the IMT-RRC 151 and W-RRC 152 respectively to reallocate the identified services.

This means that for example the IMT-MME 161 triggers.that chat is mapped back to the IMT link.

Afterwards a step 211 is executed.

In step 211, the IMT-RRC 151 checks load on the first link 110. If the load is sufficiently low, the request is accepted and the IMT-MME 161 and the W-MME 162 reallocate the identified service. Otherwise the request is rejected and the service remains on the second data link 120.

In the example this results in file download is carried over the MMW link, while chat is carried over the IMT link.

Afterwards the step 204 is executed.

The order of the aforementioned steps is arbitrary in an implementation of the method. In order to reduce the procedure time any of the steps 202 to 211 may sometimes be omitted. Default values or values already calculated or known due to implicit knowledge about the outcome or output of the individual step may be used instead of any omitted step.

The method provides data flow design integration in a multi-link/multi-RAT environment including dynamic data flow level performance evaluation on all involved layers and appropriate and dynamic link/RAT selection. All involved links may be active or on hot standby.

The function blocks depicted in figure 1 as IMT-MME 161, W-MME 162, IMT-RRC 151, W-RRC 152, IMT-RRM 141 and W-RRM 142 and the steps 201 to 211 may be implemented in distributed or co-sited hardware.

The IMT-MME 161 and the W-MME 162 are entities of the respective data links and may be implemented as respective first processors, e.g. as ASICs or FPGAs.

The IMT-RRC 151 and the IMT-RRM 141 as well as the W-RRC 152 and the W-RRM 142 are entities of the respective data links. The W-RRC 152 and the W-RRM 142 may be implemented as respective second processors, e.g. as ASICs or FPGAs. The IMT-RRC 151 and the IMT-RRM 141 may be implemented as respective third processors, e.g. as ASICs or FPGAs

The centralized network node 190 may comprise the first and second processors or, as in the example of figure 1, the core network 191 of the mobile radio network 100 comprises the first processors and the centralized network node 190 comprises the third processors. The first base station 181 and the second base station 181 for example comprise the second processor corresponding to the data link they support. This means the first base station 181 comprises the second processor implementing IMT-RRM 141. The second base station 182 comprises the second processor implementing W-RRM 141.

Alternatively the second processors may implement both of the respective IMT-RRM 141, IMT-RRC 151 and W-RRM 142, W-RRC 152.

This means that in the example the entities implemented on processors, e.g. on network nodes form a system for transmitting data in the telecommunication network between the mobile station 101 and the mobile radio network 100 providing the first data link 110 and the second data link 120 comprising the first processor implementing the IMT-MME 161 and the W-MME 162 and adapted to select the data link for transmitting the data stream of the packet switched service from the first data link 110 and the second data link 120 at the network node 190 depending on information about the current data rate of the data stream or information about the service type of the data stream.

This means that the second processor is adapted to measure the current data rate of the data stream, to detect information about the service type of the data stream from the quality of service parameter of the data stream or to determine information about the service type from information about the current data load of the data link used for the data stream and information about predetermined service types.

Furthermore the second or third processors in the example may be adapted to detect information about the service type of the data stream by measuring the data rate of the data stream and the first processor is adapted to correlate the measured data rate with predetermined information about data links.

Furthermore the device may be adapted to detect a service as candidate for being mapped from the second data link 120 to the first data link 110 depending on current data rates of the service or information about the service type as describe above. This means that the entities IMT-RRM 141, W-RRM 142, IMT-RRC 151, W-RRC 152, IMT-MME 161 or W-MME162 performing the steps of the method described above are implemented in any of the first, second or third processors in the centralized network node 190, the core network 191 of the mobile radio network 100, the first base station 181 and the second base station 182.

A person of skill in the art would readily recognize that steps of various above-described methods can be performed by programmed computers. Herein, some examples according to the invention as defined by the claims are also intended to cover program storage devices, e.g., digital data storage media, which are machine or computer readable and encode machine-executable or computer-executable programs of instructions, wherein said instructions perform all of the steps of said above-described methods, The program storage devices may be, e.g.,digital memories, magnetic storage media such as a magnetic disks and magnetic tapes, hard drives, or optically readable digital data storage media. The examples are also intended to cover computers programmed to performed said all of the steps of the above-described methods.

The description and drawings merely illustrate the principles of the invention. It will thus be appreciated that those skilled in the art will be able to devise various arrangements that, although not explicitly described or shown herein, embody the principles of the invention.

Furthermore, all examples recited herein are principally intended expressly to be only for pedagogical purposes to aid the reader inunderstanding the principles of the invention and the concepts contributed by the inventor(s) to furthering the art, and are to be construed as being without limitation to such specifically recited examples and conditions.

The functions of the various elements shown in the FIGs., including any functional blocks labeled as *"*network node*"*, *"*base station*"*, *"*entity*"* or *"*processors*"*, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term *"*processor*"* or *"*controller*"* should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. A method of transmitting data in a telecommunication network between a mobile station (101) and a mobile radio network (100) providing a first data link (110) operating in a predetermined first frequency band below 6 GHz, and a second data link (120) operating in a predetermined second frequency band above 6 GHz, wherein said mobile station (101) simultaneously supports said first data link (110) and said second data link (120) and multiple packet switched services, **wherein** the data link for transmitting a data stream of one of said packet switched services being selected (209) from the first data link (110) and the second data link (120) at a network node (181, 182, 190, 191) of the mobile radio network (100) depending on information about a current data rate of the data stream, wherein for a data stream with a first data rate, being a bit rate in the range of kbps, kilobits per second, the first data link (110) is selected and for a data stream with a second data rate, the second data rate being a data rate higher than the first data rate, the second data link (120) is selected.

2. The method according to claim 1, wherein the current data rate of the data stream is measured (207) at an entity (141, 142, 151, 152, 161, 162) of the mobile radio network (100) belonging to the data link.

3. The method according to any of claims 1 to 2, wherein information about the service type of the data stream is detected (207) at an entity (141, 142, 151, 152, 161, 162) of the mobile radio network (100) belonging to the data link from a quality of service parameter of the data stream.

4. The method according to any of claims 1 to 3, wherein information about the service type of the data stream is determined (207) by measuring the data rate of the data stream at an entity (141, 142, 151, 152, 161, 162) of the mobile radio network (100) belonging to the data link and correlating the measured data rate with information about the data link.

5. The method according to any of claims 1 to 4, wherein information about the service type is determined (207) from information about the current data load of the data link used for the data stream or information about predetermined service types or context information history of used service types or service types limited to the mobile station device type.

6. The method according to any of claims 1 to 5, wherein service classification information assigned to the mobile station (101) is detected (207) by a first base station (181), a second base station (182), or an entity (161, 162) of the mobile radio network (100), wherein the service classification information is transferred by the first base station (181), the second base station (182) or the entity (161, 162) of the mobile radio network (100) to another entity (141, 142, 151, 152, 161, 162) in the mobile radio network (100) .

7. The method according to any of claims 1 to 6, wherein a service is selected (209) as candidate for being mapped from the second data link (120) to the first data link (110) depending on current data rates of the service or information about the service type.

8. The method according to any of claims 1 to 7 further comprising
the mobile station (101) establishing the first data link (110) that carries traffic for multiple services.

9. The method according to claim 8 further comprising the mobile station (101) detecting a cell operating in a second frequency band above 6 GHz and attempting to setup the second data link (120).

10. The method according to claim 9 further comprising a second radio resource control entity (152) of the mobile radio network performing admission control (201) and completing (202) setup of the second data link (120) if admission of the mobile station (101) to the cell operating in a second frequency band above 6 GHz is possible.

11. The method according to claim 10 further comprising transmitting (203) information indicating that the mobile station (101) has setup an additional second data link (120) from a second mobility management entity (162) of the mobile radio to a first mobility management entity (161) of the mobile radio network.

12. The method according to claim 11 further comprising requesting (206) to re-allocate services, e.g. services classified as a high-rate service, to the second data link (120).

13. The method according to claim 12 further comprising a radio resource management entity (142) of the mobile radio network measuring (207) the current data rate of each service transmitted on the second data link (120), and reporting (208) the result to the entity (162) of the mobile radio network together with the service identifiers.

14. The method according to claim 13 further comprising the first mobility management entity (161) of the mobile radio network requesting (210) a first radio resource control entity (151) of the mobile radio network to reallocate a service that requires low data rate back to the first data link (110).

15. The method according to claim 14 further comprising the first radio resource control entity (151) of the mobile radio network checking (211) load on the first data link (110), and accepting the request and reallocating the service back to the first data link, if load is sufficiently low, such that for example a file download service is carried over the second data link (120) while voice service and chat service are carried over the first data link (110).

16. The method according to any of claims 1 to 15, comprising the mobile station (101) transmitting data on the selected data link (110, 120).

17. A system (181, 182, 190, 191) for transmitting data in a telecommunication network between a mobile station (101) and a mobile radio network (100) providing a first data link (110) operating in a predetermined first frequency band below 6 GHz, and a second data link (120) operating in a predetermined second frequency band above 6 GHz, wherein said mobile station (101) simultaneously supports said first data link (110) and said second data link (120) and multiple packet switched services, **comprising**
a first processor adapted to select (209) the data link for transmitting a data stream of one of said packet switched services from the first data link (110) and the second data link (120) at a network node (181, 182, 190, 191) of the mobile radio network (100) depending on information about a current data rate of the data stream, wherein for a data stream with a first data rate, being a bit rate in the range of kbps, kilobits per second, the first data link is selected and for a data stream with a second data rate, the second data rate being a data rate higher than the first data rate, the second data link is selected.

18. The system (181, 182, 190, 191) according to claim 17, comprising a second processor adapted to measure (207) the current data rate of the data stream.

19. The system (181, 182, 190, 191) according to any of claims 17 to 18, wherein the second processor is adapted to detect (207) information about the service type of the data stream from a quality of service parameter of the data stream.

20. The system (181, 182, 190, 191) according to any of claims 18 to 19, wherein the second processor is adapted to detect (207) information about the service type of the data stream by measuring the data rate of the data stream and the first processor is adapted to correlate the measured data rate with predetermined information about data links.

21. The system (181, 182, 190, 191) according to any of claims 18 to 20, wherein the second processor is adapted to determine (207) information about the service type from information about the current data load of the data link used for the data stream and information about predetermined service types.

22. The system (181, 182, 190, 191) according to any of claims 17 to 21, adapted to select (209) a service as candidate for being mapped from the second data link (120) to the first data link (110) depending on current data rates of the service or information about the service type.

23. The system (181, 182, 190, 191) according to any of claims 17 to 22, comprising a mobile station (101), wherein the mobile station (101)is adapted to perform establishing the first data link (110) that carries traffic for multiple services.

24. The system (181, 182, 190, 191) according to claim 23, wherein the mobile station (101) is adapted to perform detecting a cell operating in a second frequency band above 6 GHz and attempting to setup the second data link (120).

25. The system (181, 182, 190, 191) according to claim 24, wherein the mobile station (101) is adapted to perform transmitting data on the selected data link (110, 120) .

26. Program storage device comprising instructions which when executed by computer, cause the computer to perform all of the steps of the method according to any of claims 1 to 16.

27. Computer programmed to perform all of the steps of the method according to any of claims 1 to 16.

## Patentansprüche

1. Verfahren zum Übertragen von Daten in einem Telekommunikationsnetzwerk zwischen einer Mobilstation (101) und einem Mobilfunknetzwerk (100), das eine erste Datenverbindung (110), die in einem vorbestimmten ersten Frequenzband unter 6 GHz betrieben wird, und eine zweite Datenverbindung (120), die in einem vorbestimmten zweiten Frequenzband über 6 GHz betrieben wird, bereitstellt, wobei die Mobilstation (101) gleichzeitig die erste Datenverbindung (110) und die zweite Datenverbindung (120) sowie mehrere paketvermittelte Dienste unterstützt, wobei die Datenverbindung zum Übertragen eines Datenstroms von einem der paketvermittelten Dienste in Abhängigkeit von Informationen über eine aktuelle Datenrate des Datenstroms an einem Netzwerkknoten (181, 182, 190, 191) des Mobilfunknetzwerks (100) aus der ersten Datenverbindung (110) und der zweiten Datenverbindung (120) ausgewählt (209) wird, wobei für einen Datenstrom mit einer ersten Datenrate, bei der es sich um eine Bitrate im Bereich von kbps, Kilobit pro Sekunde, handelt, die erste Datenverbindung (110) ausgewählt wird und für einen Datenstrom mit einer zweiten Datenrate, wobei die zweite Datenrate eine Datenrate ist, die höher ist als die erste Datenrate, die zweite Datenverbindung (120) ausgewählt wird.

2. Verfahren nach Anspruch 1, wobei die aktuelle Datenrate des Datenstroms an einer Entität (141, 142, 151, 152, 161, 162) des Mobilfunknetzwerks (100), die zu der Datenverbindung gehört, gemessen (207) wird.

3. Verfahren nach einem der Ansprüche 1 bis 2, wobei Informationen über den Diensttyp des Datenstroms an einer Entität (141, 142, 151, 152, 161, 162) des Mobilfunknetzwerks (100), zu der die Datenverbindung gehört, anhand eines Dienstqualitätsparameters des Datenstroms detektiert (207) werden.

4. Verfahren nach einem der Ansprüche 1 bis 3, wobei Informationen über den Diensttyp des Datenstroms durch Messen der Datenrate des Datenstroms an einer Entität (141, 142, 151, 152, 161, 162) des Mobilfunknetzwerks (100), zu der die Datenverbindung gehört, und Korrelieren der gemessenen Datenrate mit Informationen über die Datenverbindung bestimmt (207) werden.

5. Verfahren nach einem der Ansprüche 1 bis 4, wobei Informationen über den Diensttyp anhand von Informationen über die aktuelle Datenlast der Datenverbindung, die für den Datenstrom verwendet wird, oder Informationen über vorbestimmte Diensttypen oder einen Kontextinformationsverlauf von verwendeten Datentypen oder Datentypen, die auf den Typ der Mobilstationsvorrichtung beschränkt sind, bestimmt (207) werden.

6. Verfahren nach einem der Ansprüche 1 bis 5, wobei Dienstklassifizierungsinformationen, die der Mobilstation (101) zugewiesen sind, von einer ersten Basisstation (181), einer zweiten Basisstation (182) oder einer Entität (161, 162) des Mobilfunknetzwerks (100) detektiert (207) werden, wobei die Dienstklassifizierungsinformationen von der ersten Basisstation (181), der zweiten Basisstation (182) oder der Entität (161, 162) des Mobilfunknetzwerks (100) zu einer anderen Entität (141, 142, 151, 152, 161, 162) im Mobilfunknetzwerk (100) übermittelt werden.

7. Verfahren nach einem der Ansprüche 1 bis 6, wobei ein Dienst in Abhängigkeit von aktuellen Datenraten des Dienstes oder Informationen über den Diensttyp als Kandidat für die Zuordnung von der zweiten Datenverbindung (120) zur ersten Datenverbindung (110) ausgewählt (209) wird.

8. Verfahren nach einem der Ansprüche 1 bis 7, das ferner Folgendes umfasst
Aufbauen der ersten Datenverbindung (110), auf der Verkehr für mehrere Dienste transportiert wird, durch die Mobilstation (101).

9. Verfahren nach Anspruch 8, das ferner das Detektieren einer Zelle, die in einem zweiten Frequenzband über 6 GHz betrieben wird, und das Versuchen, die zweite Datenverbindung (120) herzustellen, durch die Mobilstation (101) umfasst.

10. Verfahren nach Anspruch 9, das ferner das Durchführen einer Zugangssteuerung (201) und das Abschließen (202) der Herstellung der zweiten Datenverbindung (120) durch eine zweite Funkressourcensteuerentität (152) des Mobilfunknetzwerks umfasst, wenn der Zugang der Mobilstation (101) zu der Zelle, die in einem zweiten Frequenzband über 6 GHz betrieben wird, möglich ist.

11. Verfahren nach Anspruch 10, das ferner das Übertragen (203) von Informationen, die anzeigen, dass die Mobilstation (101) eine zusätzliche zweite Datenverbindung (120) hergestellt hat, von einer zweiten Mobilitätsverwaltungsentität (162) des Mobilfunknetzwerks zu einer ersten Mobilitätsverwaltungsentität (161) des Mobilfunknetzwerks umfasst.

12. Verfahren nach Anspruch 11, das ferner das Anfordern (206) der Neuzuteilung von Diensten, z. B. Diensten, die als ein hochratiger Dienst klassifiziert sind, zur zweiten Datenverbindung (120) umfassen.

13. Verfahren nach Anspruch 12, das ferner das Messen (207) der aktuellen Datenrate jedes auf der zweiten Datenverbindung (120) übertragenen Dienstes und das Melden (208) des Ergebnisses an die Entität (162) des Mobilfunknetzwerks zusammen mit den Dienstkennungen durch eine Funkressourcenverwaltungsentität (142) des Mobilfunknetzwerks umfasst.

14. Verfahren nach Anspruch 13, das ferner das Anfordern (210), dass eine erste Funkressourcensteuerentität (151) des Mobilfunknetzwerks einen Dienst, der eine niedrige Datenrate erfordert, wieder der ersten Datenverbindung (110) zuteilt, durch die erste Mobilitätsverwaltungsentität (161) des Mobilfunknetzwerks umfasst.

15. Verfahren nach Anspruch 14, das ferner das Prüfen (211) einer Last auf der ersten Datenverbindung (110) und das Akzeptieren der Anforderung und das erneute Zuteilen des Dienstes zur ersten Datenverbindung durch die erste Funkressourcensteuerentität (151) des Mobilfunknetzwerks umfasst, wenn eine Last ausreichend niedrig ist, derart, dass beispielsweise ein Dateidownloaddienst über die zweite Datenverbindung (120) transportiert wird, während ein Sprachdienst und ein Chatdienst über die erste Datenverbindung (110) transportiert werden.

16. Verfahren nach einem der Ansprüche 1 bis 15, das das Übertragen von Daten durch die Mobilstation (101) auf der ausgewählten Datenverbindung (110, 120) umfasst.

17. System (181, 182, 190, 191) zum Übertragen von Daten in einem Telekommunikationsnetzwerk zwischen einer Mobilstation (101) und einem Mobilfunknetzwerk (100), das eine erste Datenverbindung (110), die in einem vorbestimmten ersten Frequenzband unter 6 GHz betrieben wird, und eine zweite Datenverbindung (120), die in einem vorbestimmten zweiten Frequenzband über 6 GHz betrieben wird, wobei die Mobilstation (101) gleichzeitig die erste Datenverbindung (110) und die zweite Datenverbindung (120) sowie mehrere paketvermittelte Dienste unterstützt, das Folgendes umfasst
einen ersten Prozessor, der angepasst ist, die Datenverbindung zum Übertragen eines Datenstroms von einem der paketvermittelten Dienste in Abhängigkeit von Informationen über eine aktuelle Datenrate des Datenstroms an einem Netzwerkknoten (181, 182, 190, 191) des Mobilfunknetzwerks (100) aus der ersten Datenverbindung (110) und der zweiten Datenverbindung (120) auszuwählen (209), wobei für einen Datenstrom mit einer ersten Datenrate, bei der es sich um eine Bitrate im Bereich von kbps, Kilobit pro Sekunde, handelt, die erste Datenverbindung ausgewählt wird und für einen Datenstrom mit einer zweiten Datenrate, wobei die zweite Datenrate eine Datenrate ist, die höher ist als die erste Datenrate, die zweite Datenverbindung ausgewählt wird.

18. System (181, 182, 190, 191) nach Anspruch 17, das einen zweiten Prozessor umfasst, der angepasst ist, die aktuelle Datenrate des Datenstroms zu messen (207).

19. System (181, 182, 190, 191) nach einem der Ansprüche 17 bis 18, wobei der zweite Prozessor angepasst ist, Informationen über den Diensttyp des Datenstroms anhand eines Dienstqualitätsparameters des Datenstroms zu detektieren (207) .

20. System (181, 182, 190, 191) nach einem der Ansprüche 18 bis 19, wobei der zweite Prozessor angepasst ist, Informationen über den Diensttyp des Datenstroms durch Messen der Datenrate des Datenstroms zu detektieren (207), und der erste Prozessor angepasst ist, die gemessene Datenrate mit vorbestimmten Informationen über Datenverbindungen zu korrelieren.

21. System (181, 182, 190, 191) nach einem der Ansprüche 18 bis 20, wobei der zweite Prozessor angepasst ist, Informationen über den Diensttyp anhand von Informationen über die aktuelle Datenlast der Datenverbindung, die für den Datenstrom verwendet wird, und Informationen über vorbestimmte Diensttypen zu bestimmen (207).

22. System (181, 182, 190, 191) nach einem der Ansprüche 17 bis 21, das angepasst ist, einen Dienst als Kandidat für eine Zuordnung von der zweiten Datenverbindung (120) zur ersten Datenverbindung (110) in Abhängigkeit von aktuellen Datenraten des Dienstes oder Informationen über den Diensttyp auszuwählen (209).

23. System (181, 182, 190, 191) nach einem der Ansprüche 17 bis 22, das eine Mobilstation (101) umfasst, wobei die Mobilstation (101) angepasst ist, das Aufbauen der ersten Datenverbindung (110), auf der Verkehr für mehrere Dienste transportiert wird, durchzuführen.

24. System (181, 182, 190, 191) nach Anspruch 23, wobei die Mobilstation (101) angepasst ist, das Detektieren einer Zelle, die in einem zweiten Frequenzband über 6 GHz betrieben wird, und das Versuchen, die zweite Datenverbindung (120) herzustellen, durchzuführen.

25. System (181, 182, 190, 191) nach Anspruch 24, wobei die Mobilstation (101) angepasst ist, das Übertragen von Daten auf der ausgewählten Datenverbindung (110, 120) durchzuführen.

26. Programmspeichervorrichtung, die Anweisungen umfasst, die, wenn sie von einem Computer ausgeführt werden, den Computer veranlassen, alle Schritte des Verfahrens nach einem der Ansprüche 1 bis 16 durchzuführen.

27. Computer, der zum Durchführen von allen Schritten des Verfahrens nach einem der Ansprüche 1 bis 16 programmiert ist.

## Revendications

1. Procédé de transmission de données dans un réseau de télécommunication entre une station mobile (101) et un réseau radio mobile (100) fournissant une première liaison de données (110) fonctionnant dans une première bande de fréquences prédéterminée en dessous de 6 GHz, et une deuxième liaison de données (120) fonctionnant dans une deuxième bande de fréquences prédéterminée au-dessus de 6 GHz, dans lequel ladite station mobile (101) prend en charge simultanément ladite première liaison de données (110) et ladite deuxième liaison de données (120) et de multiples services de commutation de paquets,
dans lequel la liaison de données pour transmettre un flux de données de l'un desdits services de commutation de paquets est sélectionnée (209) parmi la première liaison de données (110) et la deuxième liaison de données (120), au niveau d'un noeud de réseau (181, 182, 190, 191) du réseau radio mobile (100) en fonction d'informations concernant un débit de données actuel du flux de données, dans lequel, pour un flux de données avec un premier débit de données qui est un débit binaire dans la plage de kbps, kilobits par seconde, la première liaison de données (110) est sélectionnée, et pour un flux de données avec un deuxième débit de données, le deuxième débit de données étant un débit de données supérieur au premier débit de données, la deuxième liaison de données (120) est sélectionnée.

2. Procédé selon la revendication 1, dans lequel le débit de données actuel du flux de données est mesuré (207) au niveau d'une entité (141, 142, 151, 152, 161, 162) du réseau radio mobile (100) appartenant à la liaison de données.

3. Procédé selon l'une quelconque des revendications 1 et 2, dans lequel des informations sur le type de service du flux de données sont détectées (207) au niveau d'une entité (141, 142, 151, 152, 161, 162) du réseau radio mobile (100) appartenant à la liaison de données, à partir d'un paramètre de qualité de service du flux de données.

4. Procédé selon l'une quelconque des revendications 1 à 3, dans lequel des informations sur le type de service du flux de données sont déterminées (207) en mesurant le débit de données du flux de données au niveau d'une entité (141, 142, 151, 152, 161, 162) du réseau radio mobile (100) appartenant à la liaison de données et en corrélant le débit de données mesuré avec des informations sur la liaison de données.

5. Procédé selon l'une quelconque des revendications 1 à 4, dans lequel des informations sur le type de service sont déterminées (207) à partir d'informations sur la charge de données actuelle de la liaison de données utilisée pour le flux de données ou d'informations sur des types de service prédéterminés ou d'un historique d'informations contextuelles de types de service utilisés ou de types de service limités au type de dispositif de station mobile.

6. Procédé selon l'une quelconque des revendications 1 à 5, dans lequel les informations de classification de service attribuées à la station mobile (101) sont détectées (207) par une première station de base (181), une deuxième station de base (182), ou une entité (161, 162) du réseau radio mobile (100), dans lequel les informations de classification de service sont transférées par la première station de base (181), la deuxième station de base (182) ou l'entité (161, 162) du réseau radio mobile (100) à une autre entité (141, 142, 151, 152, 161, 162) dans le réseau radio mobile (100).

7. Procédé selon l'une quelconque des revendications 1 à 6, dans lequel un service est sélectionné (209) comme candidat pour être mappé de la deuxième liaison de données (120) à la première liaison de données (110) en fonction de débits de données actuels du service ou des informations sur le type de service.

8. Procédé selon l'une quelconque des revendications 1 à 7 comprenant en outre
l'établissement, par la station mobile (101), de la première liaison de données (110) qui transporte le trafic pour des services multiples.

9. Procédé selon la revendication 8, comprenant en outre la détection, par la station mobile (101), d'une cellule fonctionnant dans une deuxième bande de fréquences au-dessus de 6 GHz et la tentative d'installer la deuxième liaison de données (120).

10. Procédé selon la revendication 9, comprenant en outre la réalisation, par une deuxième entité de commande de ressources radio (152) du réseau radio mobile, d'une commande d'admission (201), et achèvement (202) de l'installation de la deuxième liaison de données (120) si l'admission de la station mobile (101) à la cellule fonctionnant dans une deuxième bande de fréquences au-dessus de 6 GHz est possible.

11. Procédé selon la revendication 10, comprenant en outre la transmission (203) d'informations indiquant que la station mobile (101) a installé une deuxième liaison de données (120) supplémentaire d'une deuxième entité de gestion de la mobilité (162) du réseau radio mobile à une première entité de gestion de la mobilité (161) du réseau radio mobile.

12. Procédé selon la revendication 11, comprenant en outre la demande (206) de réattribuer des services, par exemple des services classés comme un service à haut débit, à la deuxième liaison de données (120).

13. Procédé selon la revendication 12, comprenant en outre la mesure (207), par une entité de gestion de ressources radio (142) du réseau radio mobile, du débit de données actuel de chaque service transmis sur la deuxième liaison de données (120), et le rapport (208) du résultat à l'entité (162) du réseau radio mobile avec les identifiants de service.

14. Procédé selon la revendication 13, comprenant en outre la demande, par la première entité de gestion de la mobilité (161) du réseau radio mobile (210) à une première entité de commande de ressources radio (151) du réseau radio mobile de réattribuer un service qui nécessite un faible débit de données de nouveau à la première liaison de données (110).

15. Procédé selon la revendication 14 comprenant en outre la vérification, par la première entité de commande de ressources radio (151) du réseau radio mobile (211), d'une charge sur la première liaison de données (110), et l'acceptation de la demande et la réattribution du service de nouveau à la première liaison de données, si la charge est suffisamment faible, de sorte que par exemple, un service de téléchargement de fichiers soit transporté sur la deuxième liaison de données (120) tandis que le service vocal et le service de chat sont transportés sur la première liaison de données (110).

16. Procédé selon l'une quelconque des revendications 1 à 15, comprenant la transmission, par la station mobile (101), de données sur la liaison de données sélectionnée (110, 120).

17. Système (181, 182, 190, 191) pour transmettre des données dans un réseau de télécommunication entre une station mobile (101) et un réseau radio mobile (100) fournissant une première liaison de données (110) fonctionnant dans une première bande de fréquences prédéterminée en dessous de 6 GHz, et une deuxième liaison de données (120) fonctionnant dans une deuxième bande de fréquences prédéterminée au-dessus de 6 GHz, dans lequel ladite station mobile (101) prend en charge simultanément ladite première liaison de données (110) et ladite deuxième liaison de données (120) et de multiples services de commutation de paquets, comprenant
un premier processeur adapté pour sélectionner (209) la liaison de données pour transmettre un flux de données de l'un desdits services de commutation de paquets parmi la première liaison de données (110) et la deuxième liaison de données (120) au niveau d'un noeud de réseau (181, 182, 190, 191) du réseau radio mobile (100) en fonction d'informations concernant un débit de données actuel du flux de données, dans lequel, pour un flux de données avec un premier débit de données qui est un débit binaire dans la plage de kbps, kilobits par seconde, la première liaison de données est sélectionnée, et pour un flux de données avec un deuxième débit de données, le deuxième débit de données étant un débit de données supérieur au premier débit de données, la deuxième liaison de données est sélectionnée.

18. Système (181, 182, 190, 191) selon la revendication 17, comprenant un deuxième processeur adapté pour mesurer (207) le débit de données actuel du flux de données.

19. Système (181, 182, 190, 191) selon l'une quelconque des revendications 17 à 18, dans lequel le deuxième processeur est adapté pour détecter (207) des informations sur le type de service du flux de données à partir d'un paramètre de qualité de service du flux de données.

20. Système (181, 182, 190, 191) selon l'une quelconque des revendications 18 à 19, dans lequel le deuxième processeur est adapté pour détecter (207) des informations sur le type de service du flux de données en mesurant le débit de données du flux de données et le premier processeur est adapté pour corréler le débit de données mesuré avec des informations prédéterminées sur des liaisons de données.

21. Système (181, 182, 190, 191) selon l'une quelconque des revendications 18 à 20, dans lequel le deuxième processeur est adapté pour déterminer (207) des informations sur le type de service à partir d'informations sur la charge de données actuelle de la liaison de données utilisée pour le flux de données et des informations sur des types de service prédéterminés.

22. Système (181, 182, 190, 191) selon l'une quelconque des revendications 17 à 21, adapté pour sélectionner (209) un service comme candidat pour être mappé de la deuxième liaison de données (120) à la première liaison de données (110) en fonction de débits de données actuels du service ou des informations sur le type de service.

23. Système (181, 182, 190, 191) selon l'une quelconque des revendications 17 à 22, comprenant une station mobile (101), dans lequel la station mobile (101) est adaptée pour réaliser l'établissement de la première liaison de données (110) qui transporte le trafic pour des services multiples.

24. Système (181, 182, 190, 191) selon la revendication 23, dans lequel la station mobile (101) est adaptée pour réaliser la détection d'une cellule fonctionnant dans une deuxième bande de fréquences au-dessus de 6 GHz et tenter d'installer la deuxième liaison de données (120).

25. Système (181, 182, 190, 191) selon la revendication 24, dans lequel la station mobile (101) est adaptée pour réaliser la transmission de données sur la liaison de données sélectionnée (110, 120).

26. Dispositif de stockage de programme comprenant des instructions qui, lorsqu'elles sont exécutées par un ordinateur, amènent l'ordinateur à réaliser toutes les étapes de le procédé selon l'une quelconque des revendications 1 à 16.

27. Ordinateur programmé pour réaliser l'ensemble des étapes du procédé selon l'une quelconque des revendications 1 à 16.
